# EUROPEAN PATENT SPECIFICATION

(11) **EP 3 542 043 B1**
(45) Date of publication and mention of the grant of the patent: **30.09.2020**
(21) Application number: 17804599.3
(22) Date of filing: 15.11.2017
(51) Int. Cl.: F02D 41/30, F02D 41/40, F02D 19/10, F02D 35/02, F02D 41/00

(54) **METHOD FOR OPERATING PISTON ENGINE IN GAS MODE AND PISTON ENGINE**
VERFAHREN ZUM BETRIEB EINES KOLBENMOTORS IM GASMODUS UND KOLBENMOTOR
PROCÉDÉ DE MISE EN UVRE DE MOTEUR À PISTON EN MODE GAZ ET MOTEUR À PISTON

(30) Priority: 17.11.2016 FI 20165864
(43) Date of publication of application: 25.09.2019
(73) Proprietor: Wärtsilä Finland Oy, 65100 Vaasa (FI)
(72) Inventor: HYVÖNEN, Jari, 65100 Vaasa (FI)
(74) Representative: Berggren Oy, Helsinki & Oulu
(86) International application number: PCT/FI2017/050786
(87) International publication number: WO 2018/091781

(56) References cited:
- EP-A1- 1 689 990
- US-A1- 2015 285 178
- US-A1- 2016 097 338
- US-B1- 6 289 871

## Description

### Technical field of the invention

The present invention relates to a method for operating a piston engine in a gas mode in accordance with the preamble of claim 1. The invention also concerns a piston engine as defined in the preamble of the other independent claim.

### Background of the invention

Combustion in the cylinders of a piston engine is a complex phenomenon, which is affected by several factors. For optimizing the operation of a piston engine, many different parameters, such as fuel injection amount and timing, charge air pressure and intake and exhaust valve timing need to be carefully adjusted. Even small variations in the operating conditions may drastically change the emissions or performance of an engine. One such change is the amount of lubricating oil in the cylinders of the engine. Oil is used for lubricating pistons and various other components of engines. It is desirable to prevent the lubricating oil from leaking into the cylinders, but it is very challenging to completely prevent oil leakages into the combustion chambers. The primary routes for oil leaks into the combustion chambers are via piston rings and valve stems. Oil in a combustion chamber can have a significant effect on the speed and duration of the combustion. Oil droplets in the combustion chamber for example increase the speed of heat release and lead to higher peak cylinder pressures, increase NOₓ emissions and efficiency of the engine and increase coefficient of variation in indicated mean effective pressure. A further challenge is that the leakage rate of lubricating oil is not necessarily constant, but it can be periodic or cyclic, which makes the optimization of the engine operation very difficult.

The effect of oil leaks into combustion chambers is significant in particular when an engine is operated in a gas mode. Gaseous fuels commonly used in piston engines require spark plugs or pilot fuel injection for triggering the combustion of the gaseous fuel. In case pilot fuel is used, the amount of the pilot fuel is small compared to the amount of the gaseous fuel, but the injection timing and duration of the pilot fuel still have a significant effect on the combustion process. Although the amount of leaking lubricating oil is small compared to the amount of the gaseous fuel, the amount of the lubricating oil compared to the amount of the pilot fuel can be substantial. Therefore, oil leakages can cause noteworthy changes in the operation of an engine. For instance, if the operating point of the engine is close to knock, the leaking oil can cause or increase knocking.

US 2015/285178 A1 is a relevant prior art for the invention disclosing a dual fuel engine.

### Summary of the invention

An object of the present invention is to provide an improved method for operating a piston engine in a gas mode using a gaseous fuel as a main fuel that forms a main source of energy and a liquid fuel as a pilot fuel for triggering combustion of the main fuel. The characterizing features of the method according to the invention are given in the characterizing part of claim 1. Another object of the invention is to provide an improved piston engine comprising a gas feed system for introducing gaseous fuel into the cylinders of the engine, a pilot fuel injection system for injecting liquid pilot fuel into the cylinders of the engine for triggering combustion of the gaseous fuel, and a control unit for controlling feeding of the gaseous fuel and the pilot fuel injection. The characterizing features of the engine according to the invention are given in the characterizing part of the other independent claim.

The method according to the invention comprises the steps of introducing the main fuel into a combustion chamber of a cylinder of the engine and injecting the pilot fuel into the combustion chamber and/or into a prechamber of the cylinder. The pilot fuel is injected at least during a first injection event and a second injection event, which are separated from each other in respect of time, and the amount of the pilot fuel injected during the first injection event is adjusted on the basis of cylinder pressure measurement.

In the piston engine according to the invention, the control unit is configured to implement the method defined above.

With the method and engine according to the invention, variations of the amount of lubricating oil that is present in the combustion chamber can be compensated by adjusting the amount of the pilot fuel that is injected into the cylinder. The combustion duration can thus be kept constant and excessive cylinder peak pressures and temperatures can be avoided.

According to an embodiment of the invention, the first injection event takes place during intake stroke or compression stroke 360 to 90 degrees before top dead center. The first injection event can take place for instance 220 to 90 degrees before top dead center. According to an embodiment of the invention, the first injection event takes place 180 to 90 degrees before top dead center during compression stroke. The first injection event can take place for example 180 to 140 degrees before top dead center during compression stroke. Early pilot fuel injection allows the pilot fuel to be uniformly distributed in the combustion chamber, which helps to speed up the combustion process.

According to an embodiment of the invention, the second injection event takes place 40 to 0 degrees before top dead center during compression stroke, for example 20 to 0 degrees before top dead center. The second injection event is responsible for the timing of the ignition, and should thus take place close to top dead center.

According to an embodiment of the invention, the main fuel is introduced into the combustion chamber during intake stroke for forming a homogenous mixture of air and fuel.

According to an embodiment of the invention, the pressure measurement is used for determining a first variable describing combustion duration, and the amount of the pilot fuel injected during the first injection event is adjusted on the basis of the first variable. The first injection event can thus be controlled directly on the basis of the combustion duration.

The first variable can be compared to a predetermined target value or target range, and in case the comparison indicates that the combustion duration is too short, the amount of fuel injected during the first injection event can be decreased, and in case the comparison indicates that the combustion duration is too long, the amount can be increased. As an example, for a certain variable a value below the target value or target range can be an indication of too short combustion duration, in which case the fuel injection amount can be decreased. Similarly, a value above the target value can be an indication of too long combustion duration, in which case the fuel injection amount can be increased. Faster combustion improves thermodynamic efficiency of the engine.

According to an embodiment of the invention, the timing of the second injection event is adjusted on the basis of cylinder pressure measurement. The cylinder pressure measurement can be used for determining a second variable describing the timing of the combustion, and the timing of the second injection event can be adjusted on the basis of the second variable. The control of the second injection event can thus be based directly on the timing of the combustion.

The second variable can be compared to a predetermined target value or target range, and in case the comparison indicates that the combustion starts too early, the second injection event can be delayed, and in case the comparison indicates that the combustion starts too late, the second injection event can be advanced. As an example, for a certain variable a value below the target value or target range can be an indication of combustion that starts too early, in which case the second injection event can be delayed. Similarly, a value above the target value can be an indication of combustion that starts too late, in which case the second injection event can be advanced.

According to an embodiment of the invention, 5 to 30 percent of the pilot fuel is injected during the first injection event and the rest of the pilot fuel is injected during the second injection event. By keeping the fuel amount injected during the first injection event within this range, variations in the amount of lubricating oil that is present in the combustion chamber can be compensated, but premature ignition of the main fuel is avoided.

According to an embodiment of the invention, the cylinder pressure of each cylinder of the engine is individually monitored. Also the amount of the pilot fuel injected during the first injection event and/or the timing of the second injection event can be adjusted individually in each cylinder of the engine. Each cylinder of the engine can thus be operated with optimum settings for pilot fuel injection.

### Brief description of the drawings

Embodiments of the invention are described below in more detail with reference to the accompanying drawings, in which
Fig. 1 shows schematically a piston engine that can be operated using a gaseous fuel as a main fuel, and
Fig. 2 shows schematically one cylinder of the engine of figure 1.

### Description of embodiments of the invention

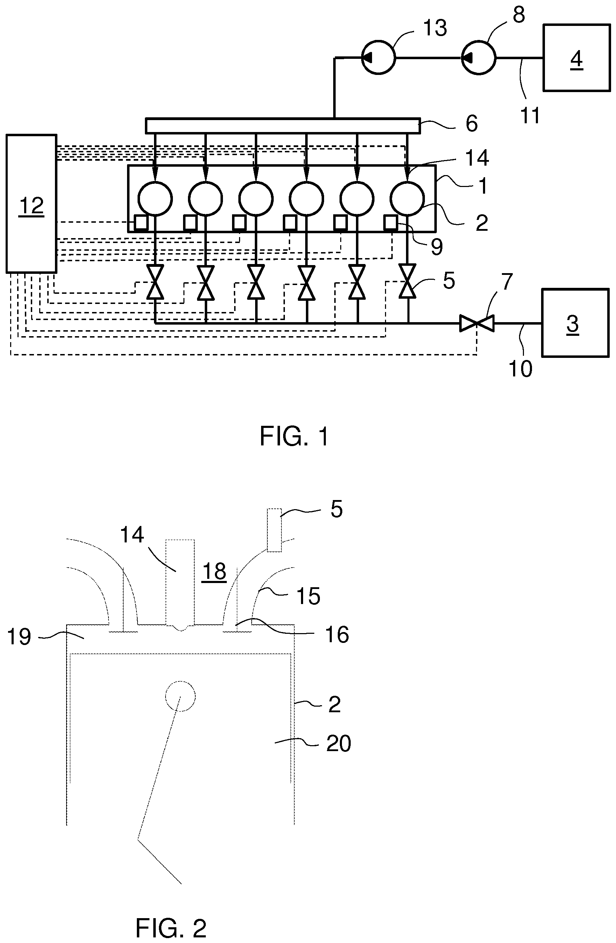

In figure 1 is shown a multi-cylinder piston engine 1. The engine 1 is a large internal combustion engine, such as a main or an auxiliary engine of a ship or an engine that is used at a power plant for producing electricity. The cylinder bore of the engine 1 is at least 150 mm. In the embodiment of figure 1, the engine 1 comprises six cylinders 2, which are arranged in line. However, the engine 1 could comprise any reasonable number of cylinders 2, which could also be arranged, for instance, in a V-configuration. The engine 1 is a gas engine, dual-fuel engine or multi-fuel engine. It can be operated at least in a gas mode using a gaseous main fuel. The expression "main fuel" refers to a fuel that is the main source of energy and which is thus responsible for the major part of heat release in the cylinders 2. In case the engine 1 is a dual-fuel or multi-fuel engine, it can be additionally operated in at least one liquid fuel mode using a liquid fuel as a main fuel. The engine 1 is a four-stroke engine, and one engine cycle thus comprises an intake stroke, compression stroke, power stroke and exhaust stroke.

For introducing the gaseous fuel into the cylinders 2 of the engine 1, the engine 1 is provided with a gas feed system. The gas feed system is configured to introduce gaseous fuel into the cylinders 2 of the engine 1. The gaseous fuel can be, for instance, natural gas, biogas or associated gas from an oil drilling site. Each cylinder 2 of the engine 1 is provided with a gas admission valve 5, which can be used for controlling the supply of the gaseous fuel into the cylinder 2. The gas admission valves 5 are connected to a control unit 12, which controls opening and closing of the gas admission valves 5. In the embodiment of the figures, the gaseous fuel is not introduced directly into the cylinders 2, but each gas admission valve 5 is configured to introduce the gaseous fuel into an intake duct 15 of the engine 1 close to the intake valves 16 of the cylinder 2, as shown in figure 2.

The gaseous fuel is thus introduced into the cylinders 2 of the engine 1 during the intake stroke. The gaseous fuel is mixed with the intake air to form a homogenous mixture. The mixture is preferably a lean mixture containing more air than is needed for complete combustion of the fuel that is introduced into the cylinders 2. Part of the gaseous fuel can be introduced into a prechamber for forming a richer mixture, which facilitates ignition of the fuel/air mixture. Each cylinder 2 can be provided with a prechamber valve for controlling the supply of the gaseous fuel into the prechamber. When the engine 1 is operated using the gaseous fuel as the main fuel, Otto combustion process is utilized. The mixture of air and the gaseous fuel is ignited using a liquid pilot fuel for triggering the combustion. The gaseous fuel is supplied to the cylinders 2 of the engine 1 from a gas source, such as a gas tank 3, via a gas supply pipe 10. The gas source could also be, for instance, a pipe line or an industrial process producing combustible gas. The gas feed system is provided with a main gas valve 7 for controlling the pressure of the gas that is supplied to the gas admission valves 5 of the cylinders 2. Instead of introducing the gaseous fuel into the intake duct 15, the gaseous fuel could also be injected directly into the cylinders 2 of the engine 1 or into prechambers.

In addition to the gas feed system, the engine 1 comprises a pilot fuel injection system. The pilot fuel injection system is used for introducing liquid pilot fuel into the cylinders 2 of the engine 1 for igniting the gaseous fuel. The pilot fuel can be, for instance, light fuel oil. In the embodiment of the figures, the pilot fuel injection system is a common rail system. The pilot fuel injection system comprises a low-pressure pump 8, which supplies fuel from a liquid fuel source, such as a fuel tank 4, to a high-pressure pump 13. The low-pressure pump 8 supplies fuel to the high-pressure pump 13 at a first pressure level, which can be, for instance, in the range of 5 to 15 bar. The high-pressure pump 13 raises the fuel pressure to a second level, which is suitable for direct fuel injection into the cylinders 2 of the engine 1. The second level can be, for instance, in the range of 500 to 3000 bar. Instead of injecting the fuel directly into the cylinders 2, it could be injected into prechambers. A fuel feed pipe 11 connects the low-pressure pump 8 to the fuel tank 4. The pressurized fuel from the high-pressure pump 13 is supplied to a fuel rail 6. Each cylinder 2 of the engine 1 is provided with a fuel injector 14, which is configured to inject the pilot fuel into the cylinder 2. In the embodiment of figure 2, each fuel injector 14 is configured to inject the pilot fuel directly into a combustion chamber 19 of the cylinder 2. The combustion chamber 19 is delimited by the wall of the cylinder 2, piston 20 and cylinder head 18. The amount of pilot fuel that is introduced into the cylinders 2 is small compared to the amount of the main fuel. Preferably, the combustion of the pilot fuel in a cylinder 2 releases at most 10 percent of the total heat released in the cylinder 2.

In the embodiment of figure 1, all the fuel injectors 14 are connected to the same fuel rail 6. However, the pilot fuel injection system could be constructed in many other ways. For instance, the pilot fuel injection system could comprise several low-pressure and/or high-pressure pumps 8, 13. Instead of one fuel rail 6, the pilot fuel injection system could comprise two or more fuel rails. Instead of a fuel rail serving several cylinders 2 of the engine 1, each cylinder 2 could be provided with an own fuel accumulator. Each fuel injector 14 can be individually controlled. The fuel injectors 14 are connected to the control unit 12, which can be used for adjusting the timing and duration of the pilot fuel injection. Also the amount of the injected pilot fuel can thus be controlled. If the engine 1 is a dual-fuel or multi-fuel engine 1, the fuel injectors 14 could function both as pilot fuel injectors and main fuel injectors for injecting liquid main fuel into the cylinders 2.

For monitoring the combustion process in the cylinders 2 of the engine 1, each cylinder 2 of the engine 1 is provided with a pressure sensor 9, which is configured to monitor the pressure in the combustion chamber 19 of the cylinder 2. The pressure sensors 19 can be arranged, for instance, in the cylinder heads 18 or in the walls of the cylinders 2. The pressure sensors 19 can measure the cylinder pressure either directly or indirectly.

When the engine 1 is operated in the gas mode, the pilot fuel is injected into each cylinder 2 during at least two injection events, which are separated from each other in respect of time. The two pilot fuel injections thus take place at different crank angles. Preferably, the pilot fuel injection is divided into exactly two injection events. A first pilot fuel injection event takes place at the beginning of the compression stroke. The first injection event can take place, for instance, at a crank angle that is 180 to 90 degrees before top dead center, or 180 to 140 degrees before top dead center. The pilot fuel injected during the first injection event is distributed in the combustion chamber 19 and can be even partly evaporated. The effect of the pilot fuel is similar to the effect of lubricating oil that has leaked into the combustion chamber 19. During combustion of the gaseous main fuel, the pilot fuel that is mixed with the main fuel speeds up the combustion in the same way as lubricating oil droplets. The combustion duration is thus shortened. In the first injection event, the pilot fuel could be injected into the intake ports instead of direct injection into the cylinders 2. For port injection, the engine 1 should be provided with additional pilot fuel injectors that are configured to inject fuel into the intake ports.

A second pilot fuel injection event takes place later during the compression stroke. The timing of the second injection event can correspond to the timing conventionally used in engines with pilot fuel injection. The second injection event can thus take place for example 40 to 0 degrees before top dead center, preferably 20-0 degrees before top dead center. The purpose of the second injection event is to initiate combustion of the air/fuel mixture in the combustion chamber 19.

The two separate pilot fuel injection events enable good control of the combustion process. The first injection event can be used for adjusting the duration of the combustion. By increasing the amount of pilot fuel injected during the first injection event, the speed of combustion can be increased. The duration of the combustion is thus shortened. By decreasing the amount of pilot fuel injected during the first injection event, the speed of combustion is decreased and the combustion duration is increased. The second injection event can be used for adjusting the timing of the combustion. If the second injection event is advanced, the combustion starts earlier. If the second injection event is delayed, the combustion starts later. The injection timings and durations can be adjusted independently in each cylinder 2 of the engine 1. Different operating conditions of different cylinders 2 can thus be taken into account. For instance, in case of a malfunctioning sealing of a valve stem in a certain cylinder 2, the amount of pilot fuel injected during the first injection event can be decreased in that cylinder 2 while keeping the injection amounts unchanged in other cylinders 2 of the engine 1.

By adjusting the pilot fuel injection events, excessive peak cylinder pressures and heavy knocking can be avoided. Even temporary high cylinder pressures can damage the cylinder pressure sensors 9, and in the long run knocking and high cylinder pressures can break also other components of the engine 1.

The combustion process can be monitored using the pressure sensor 9. On the basis of the pressure measurements, the duration and timing of combustion can be determined. The cylinder pressure measurement can be used for determining a first variable describing the duration of the combustion. The cylinder pressure measurement can also be used for determining a second variable describing the timing of the combustion. The first variable can be used for adjusting the amount of pilot fuel injected during the first injection event. The second variable can be used for adjusting the timing of the second injection event. If the first variable indicates that the combustion duration is too short, the duration of the first injection event is decreased, and if the first variable indicates that the combustion duration is too long, the duration of the first injection event is increased. If the second variable indicates that the combustion takes place too early, the second injection event is delayed, and if the second variable indicates that the combustion takes place too late, the second injection event is advanced.

A target value or target range can be determined for each of the first variable and the second variable. When the engine 1 is operated in the gas mode, the cylinder pressures are constantly monitored and on the basis of the measured pressures, first and second variables are determined individually for each cylinder 2 of the engine. The target values or target ranges do not need to be constant, but they can depend, for instance, on engine load.

As an example, the first variable can be the difference between CA10 and CA90 crank angles. CA10 refers to the crank angle, at which 10 percent of the fuel introduced into the cylinder during the engine cycle has been combusted. Similarly, CA90 is the crank angle, at which 90 percent of the fuel has been combusted. A target range can then be determined for the difference between CA10 and CA90 crank angles. If the first variable determined from the measured cylinder pressures is below the target range, i.e. the combustion duration is too short, the duration of the first injection event is decreased. Less pilot fuel is thus introduced into the cylinder 2 in question and the combustion duration increases. If the first variable is within the target range, the duration of the first pilot fuel injection is maintained in the current setting. If the first variable is above the target range, i.e. the duration of the combustion is too long, the duration of the first injection event is increased. More pilot fuel is thus introduced into the cylinder 2 in question and the combustion speed is increased. This increases thermodynamic efficiency of the engine. Also quenching of flame can be minimized and THC emissions thus reduced.

The second variable can be, for instance, CA50 value. That refers to the crank angle, at which 50 percent of the fuel introduced into the cylinder during the engine cycle has been combusted. A target range can be determined for the CA50 crank angle. The target range could be, for instance, 6-10 degrees after top dead center. If the second variable is below the target range, i.e. 50 percent of the fuel is burned before the crank angle of 6 degrees after top dead center, the second injection event is delayed. If the second variable is within the target range, the current timing is maintained. If the second variable is above the target range, the second injection event is advanced.

Monitoring of the cylinder pressures is continuous. The first injection event and the second injection event can thus be adjusted by means of a closed loop control. The cylinder pressures measured during an engine cycle can be used as an input for adjusting pilot fuel injection during the following engine cycle. Optimal combustion process can thus be achieved in each cylinder 2 of the engine 1.

The engine 1 can be operated using Miller timing, i.e. early closing of the intake valves 16. The intake valves 16 can be closed, for instance, 15-70 degrees before bottom dead center during the intake stroke. The use of Miller cycle reduces the risk of knocking. This is beneficial especially if the methane number or octane number of the gaseous main fuel is low.

It will be appreciated by a person skilled in the art that the invention is not limited to the embodiments described above, but may vary within the scope of the appended claims. For instance, different variables than those described above can be used for describing the duration and timing of the combustion.

## Claims

1. A method for operating a piston engine (1) in a gas mode using a gaseous fuel as a main fuel that forms a main source of energy and a liquid fuel as a pilot fuel for triggering combustion of the main fuel, the method comprising the steps of
- introducing the main fuel into a combustion chamber (19) of a cylinder (2) of the engine (1),
- injecting the pilot fuel into the combustion chamber (19) and/or into a prechamber of the cylinder (2),
wherein the pilot fuel is injected during each engine cycle at least during a first injection event and a second injection event, which are separated from each other in respect of time, **characterized in that** cylinder pressure measurement is used for determining a first variable describing combustion duration, and the amount of the pilot fuel injected during the first injection event is adjusted on the basis of the first variable, and that 5 to 30 percent of the pilot fuel is injected during the first injection event and the rest of the pilot fuel is injected during the second injection event.

2. A method according to claim 1, wherein the first injection event takes place during intake stroke or compression stroke 360 to 90 degrees before top dead center.

3. A method according to claim 2, wherein the first injection event takes place 220 to 90 degrees before top dead center.

4. A method according to claim 3, wherein the first injection event takes place 180 to 90 degrees before top dead center during compression stroke.

5. A method according to claim 4, wherein the first injection event takes place 180 to 140 degrees before top dead center during compression stroke.

6. A method according to any of claims 1 to 5, wherein the second injection event takes place 40 to 0 degrees before top dead center during compression stroke.

7. A method according to claim 6, wherein the second injection event takes place 20 to 0 degrees before top dead center during compression stroke.

8. A method according to any of the preceding claims, wherein the main fuel is introduced into the combustion chamber (19) during intake stroke for forming a homogenous mixture of air and fuel.

9. A method according to any of the preceding claims, wherein the first variable is compared to a predetermined target value or target range, and in case the comparison indicates that the combustion duration is too short, the amount of fuel injected during the first injection event is decreased, and in case the comparison indicates that the combustion duration is too long, the amount is increased.

10. A method according to any of the preceding claims, wherein the timing of the second injection event is adjusted on the basis of cylinder pressure measurement.

11. A method according to claim 10, wherein the cylinder pressure measurement is used for determining a second variable describing the timing of the combustion, and the timing of the second injection event is adjusted on the basis of the second variable.

12. A method according to claim 11, wherein the second variable is compared to a predetermined target value or target range, and in case the comparison indicates that the combustion starts too early, the second injection event is delayed, and in case the comparison indicates that the combustion starts too late, the second injection event is advanced.

13. A method according to any of the preceding claims, wherein the cylinder pressure of each cylinder (2) of the engine (1) is individually monitored.

14. A method according to any of the preceding claims, wherein the amount of the pilot fuel injected during the first injection event is adjusted individually in each cylinder (2) of the engine (1).

15. A method according to any of the preceding claims, wherein the timing of the second injection event is adjusted individually in each cylinder (2) of the engine (1).

16. A piston engine (1) comprising a gas feed system for introducing gaseous fuel into the cylinders (2) of the engine (1), a pilot fuel injection system for injecting liquid pilot fuel into the cylinders (2) of the engine (1) for triggering combustion of the gaseous fuel, and a control unit (12) for controlling feeding of the gaseous fuel and the pilot fuel injection, **characterized in that** the control unit (12) is configured to implement the method according to any of the preceding claims.

## Patentansprüche

1. Verfahren zum Betreiben eines Kolbenmotors (1) in einem Gasmodus unter Verwendung eines gasförmigen Kraftstoffs als Hauptbrennstoff, der eine Hauptenergiequelle bildet, und eines flüssigen Kraftstoffs als Zündbrennstoff zum Auslösen der Verbrennung des Hauptbrennstoffs, wobei das Verfahren die folgenden Schritte umfasst
- Einführen des Hauptbrennstoffs in eine Brennkammer (19) eines Zylinders (2) des Motors (1),
- Einspritzen des Zündbrennstoffs in den Brennraum (19) und/oder in eine Vorkammer des Zylinders (2),
wobei der Zündbrennstoff während jedes Motorzyklus mindestens während eines ersten Einspritzereignisses und eines zweiten Einspritzereignisses eingespritzt wird, die zeitlich voneinander getrennt sind, **dadurch gekennzeichnet, dass** die Zylinderdruckmessung zur Bestimmung einer ersten Variablen verwendet wird, die die Verbrennungsdauer beschreibt, und die Menge des während des ersten Einspritzereignisses eingespritzten Zündbrennstoffs auf der Basis der ersten Variablen eingestellt wird, und dass 5 bis 30 Prozent des Zündbrennstoffs während des ersten Einspritzereignisses eingespritzt wird, und der Rest des Zündbrennstoffs während des zweiten Einspritzereignisses eingespritzt wird.

2. Verfahren nach Anspruch 1, wobei das erste Einspritzereignis während des Ansaughubs oder des Kompressionshubs 360 bis 90 Grad vor dem oberen Totpunkt stattfindet.

3. Verfahren nach Anspruch 2, wobei das erste Einspritzereignis 220 bis 90 Grad vor dem oberen Totpunkt stattfindet.

4. Verfahren nach Anspruch 3, wobei das erste Einspritzereignis während des Kompressionshubs 180 bis 90 Grad vor dem oberen Totpunkt stattfindet.

5. Verfahren nach Anspruch 4, wobei das erste Einspritzereignis 180 bis 140 Grad vor dem oberen Totpunkt während des Kompressionshubs stattfindet.

6. Verfahren nach einem der Ansprüche 1 bis 5, wobei das zweite Einspritzereignis 40 bis 0 Grad vor dem oberen Totpunkt während des Kompressionshubs stattfindet.

7. Verfahren nach Anspruch 6, wobei das zweite Einspritzereignis 20 bis 0 Grad vor dem oberen Totpunkt während des Kompressionshubs stattfindet.

8. Verfahren nach einem der vorhergehenden Ansprüche, wobei der Hauptbrennstoff während des Ansaughubs in die Brennkammer (19) eingeführt wird, um ein homogenes Gemisch aus Luft und Kraftstoff zu bilden.

9. Verfahren nach einem der vorhergehenden Ansprüche, wobei die erste Variable mit einem vorbestimmten Zielwert oder Zielbereich verglichen wird, und falls der Vergleich anzeigt, dass die Verbrennungsdauer zu kurz ist, die während des ersten Einspritzereignisses eingespritzte Kraftstoffmenge verringert wird, und falls der Vergleich anzeigt, dass die Verbrennungsdauer zu lang ist, die Menge erhöht wird.

10. Verfahren nach einem der vorhergehenden Ansprüche, wobei der Zeitpunkt des zweiten Einspritzereignisses auf der Basis einer Zylinderdruckmessung eingestellt wird.

11. Verfahren nach Anspruch 10, wobei die Zylinderdruckmessung zum Bestimmen einer zweiten Variablen verwendet wird, die den Zeitpunkt der Verbrennung beschreibt, und der Zeitpunkt des zweiten Einspritzereignisses auf der Basis der zweiten Variablen eingestellt wird.

12. Verfahren nach Anspruch 11, wobei die zweite Variable mit einem vorbestimmten Zielwert oder Zielbereich verglichen wird, und falls der Vergleich anzeigt, dass die Verbrennung zu früh beginnt, das zweite Einspritzereignis verzögert wird, und falls der Vergleich anzeigt, dass die Verbrennung zu spät beginnt, das zweite Einspritzereignis vorgezogen wird.

13. Verfahren nach einem der vorhergehenden Ansprüche, wobei der Zylinderdruck jedes Zylinders (2) des Motors (1) einzeln überwacht wird.

14. Verfahren nach einem der vorhergehenden Ansprüche, wobei die Menge des während des ersten Einspritzereignisses eingespritzten Zündbrennstoffs in jedem Zylinder (2) des Motors (1) einzeln eingestellt wird.

15. Verfahren nach einem der vorhergehenden Ansprüche, wobei der Zeitpunkt des zweiten Einspritzereignisses in jedem Zylinder (2) des Motors (1) individuell eingestellt wird.

16. Kolbenmotor (1) mit einem Gaszufuhrsystem zum Einführen von gasförmigem Kraftstoff in die Zylinder (2) des Motors (1), einem Zündbrennstoffeinspritzsystem zum Einspritzen von flüssigem Zündbrennstoff in die Zylinder (2) des Motors (1) zum Auslösen der Verbrennung des gasförmigen Kraftstoffs und einer Steuereinheit (12) zum Steuern der Zufuhr des gasförmigen Kraftstoffs und der Zündbrennstoffeinspritzung, **dadurch gekennzeichnet, dass** die Steuereinheit (12) konfiguriert ist, um das Verfahren gemäß einem der vorhergehenden Ansprüche zu implementieren.

## Revendications

1. Procédé de mise en œuvre d'un moteur à piston (1) dans un mode gaz en utilisant un carburant gazeux comme carburant principal qui forme une source principale d'énergie et un carburant liquide comme carburant pilote pour déclencher la combustion du carburant principal, le procédé comprenant les étapes
- d'introduction du carburant principal dans une chambre de combustion (19) d'un cylindre (2) du moteur (1),
- d'injection du carburant pilote dans la chambre de combustion (19) et/ou dans une préchambre du cylindre (2),
dans lequel le carburant pilote est injecté pendant chaque cycle de moteur au moins pendant un premier événement d'injection et un second événement d'injection, qui sont séparés l'un de l'autre en fonction du temps, **caractérisé en ce que** la mesure de pression de cylindre est utilisée pour déterminer une première variable décrivant la durée de combustion, et la quantité du carburant pilote injecté pendant le premier événement d'injection est ajustée sur la base de la première variable, et **en ce que** 5 à 30 pour cent du carburant pilote sont injectés pendant le premier événement d'injection et **en ce que** le reste du carburant pilote est injecté lors du second événement d'injection.

2. Procédé selon la revendication 1, dans lequel le premier événement d'injection a lieu pendant la course d'admission ou la course de compression de 360 à 90 degrés avant le point mort haut.

3. Procédé selon la revendication 2, dans lequel le premier événement d'injection a lieu de 220 à 90 degrés avant le point mort haut.

4. Procédé selon la revendication 3, dans lequel le premier événement d'injection a lieu de 180 à 90 degrés avant le point mort haut pendant la course de compression.

5. Procédé selon la revendication 4, dans lequel le premier événement d'injection a lieu de 180 à 140 degrés avant le point mort haut pendant la course de compression.

6. Procédé selon l'une quelconque des revendications 1 à 5, dans lequel le second événement d'injection a lieu de 40 à 0 degrés avant le point mort haut pendant la course de compression.

7. Procédé selon la revendication 6, dans lequel le second événement d'injection a lieu de 20 à 0 degrés avant le point mort haut pendant la course de compression.

8. Procédé selon l'une quelconque des revendications précédentes, dans lequel le carburant principal est introduit dans la chambre de combustion (19) pendant la course d'admission pour former un mélange homogène d'air et de carburant.

9. Procédé selon l'une quelconque des revendications précédentes, dans lequel la première variable est comparée avec une valeur cible prédéterminée ou une plage cible prédéterminée, et dans le cas où la comparaison indique que la durée de combustion est trop courte, la quantité de carburant injectée pendant le premier événement d'injection est diminuée, et dans le cas où la comparaison indique que la durée de combustion est trop longue, la quantité est augmentée.

10. Procédé selon l'une quelconque des revendications précédentes, dans lequel la synchronisation du second événement d'injection est ajustée sur la base d'une mesure de pression de cylindre.

11. Procédé selon la revendication 10, dans lequel la mesure de pression de cylindre est utilisée pour déterminer une seconde variable décrivant la synchronisation de la combustion, et la synchronisation du second événement d'injection est ajustée sur la base de la seconde variable.

12. Procédé selon la revendication 11, dans lequel la seconde variable est comparée avec une valeur cible prédéterminée ou une plage cible prédéterminée, et dans le cas où la comparaison indique que la combustion commence trop tôt, le second événement d'injection est retardé, et dans le cas où la comparaison indique que la combustion démarre trop tard, le second événement d'injection est avancé.

13. Procédé selon l'une quelconque des revendications précédentes, dans lequel la pression de cylindre de chaque cylindre (2) du moteur (1) est commandée individuellement.

14. Procédé selon l'une quelconque des revendications précédentes, dans lequel la quantité du carburant pilote injecté pendant le premier événement d'injection est ajustée individuellement dans chaque cylindre (2) du moteur (1).

15. Procédé selon l'une quelconque des revendications précédentes, dans lequel la synchronisation du second événement d'injection est ajustée individuellement dans chaque cylindre (2) du moteur (1).

16. Moteur à piston (1) comprenant un système d'alimentation en gaz pour introduire du carburant gazeux dans les cylindres (2) du moteur (1), un système d'injection de carburant pilote pour injecter du carburant pilote liquide dans les cylindres (2) du moteur (1) afin de déclencher la combustion du carburant gazeux, et une unité de commande (12) pour commander l'alimentation du carburant gazeux et l'injection de carburant pilote, **caractérisé en ce que** l'unité de commande (12) est configurée pour mettre en œuvre le procédé selon l'une quelconque des revendications précédentes.
